# EUROPÄISCHE PATENTANMELDUNG

(11) **EP 3 669 643 A1**
(43) Veröffentlichungstag der Anmeldung: **24.06.2020**
(21) Anmeldenummer: 18213219.1
(22) Anmeldetag: 17.12.2018
(51) Int. Cl.: A01K 27/00

(54) **VERBINDUNGSSYSTEM ZUM VERBINDEN VON LASTEN AN EINEM GURTGESCHIRR**

(71) Anmelder: Bierwald, Alexander, 46119 Oberhausen (DE)
(72) Erfinder: Bierwald, Alexander, 46119 Oberhausen (DE)
(74) Vertreter: Gille Hrabal

(57) **Zusammenfassung**

Es ist ein Verbindungssystem zum Verbinden und Trennen von Lasten an einem Gurtgeschirr, mit einem Basiselement (20) mit Befestigungsmitteln (21) zum Befestigen an einem Gurtgeschirr; einem Lastelement (10) mit Anschlussmitteln (12) zum Anschließen einer Last, beispielsweise ein Lastschlitten, insbesondere über eine Zugstange oder ein Zugseil offenbart, bei welchem das Basiselement (20) und das Lastelement (30) derart ausgelegt sind, dass diese in eine Kontaktstellung gegeneinander bringbar sind, bei welcher das Lastelement am Basiselement teilweise fixiert ist; ein bewegliches Verriegelungselement (30) vorgesehen ist zum vollständigen Fixieren des in Kontaktstellung befindlichen Lastelements (10) am Basiselement (20), wobei in der Kontaktstellung das Verriegelungselement (30) relativ zum Basiselement und Lastelement in eine Verschlussstellung bringbar ist, in welcher das Lastelement vollständig formschlüssig mit dem Basiselement verriegelt ist, und das Verbindungssystem nach Art eines Schnellabwurfsystems ausgebildet ist, zum Trennen des Lastelements (10) von dem Basiselement (20) unmittelbar aus der Verschlussstellung heraus. Das erfindungsgemäße Verbindungssystem erlaubt unter Vereisungsbedingungen, Sichtbehinderung und/oder mit Handschuhen, eine vereinfachte, schnelle und sichere Handhabung.

## Beschreibung

Die Erfindung betrifft ein Verbindungssystem zum Verbinden von Lasten an einem Gurtgeschirr.

Insbesondere betrifft die Erfindung ein Verbindungssystem zum Verbinden eines Schlittens oder "Pulka" an einem Gurtgeschirr. Der Lastenschlitten ist dabei insbesondere ein bootsähnlich konstruierter Schlitten mit einer Kunststoffwanne, welcher heute auch als Transportschlitten bei Wintertrekkingtouren verwendet und vom Wanderer selbst gezogen wird. Das Gurtgeschirr ist mit dem Schlitten häufig statt mit einer Seilverbindung mit einem Zuggestänge verbunden. Dadurch wird ein besserer Geradeauslauf des Schlittens gewährleistet und ein geregeltes Bremsen an Steilhängen ermöglicht. Die für Nord- und Südpolexpeditionen verwendeten Schlitten wiegen in beladenem Zustand oft weit über 100 kg.

Gurtgeschirre werden in der Regel am Körper von Menschen und Tieren angelegt und dienen der Lasteinleitung zum Körper hin. Die Geschirre sind daher mit einem weiteren Objekt, nachfolgend als Last bezeichnet, verbunden. Bei der Last kann es sich beispielsweise um einen Fallschirm, ein Sicherungsseil zum Schutz gegen Absturz oder einen Schlitten handeln. Je nach Anwendungszweck sind auch Zugstangen üblich um die Last, zum Beispiel den Schlitten, auf Abstand zu halten, was beispielsweise auf abschüssigem Gelände zweckmäßig ist.

Als lösbares Verbindungssystem zwischen der Zugstange eines Schlittens und Gurtgeschirr dient üblicherweise ein Karabinerhaken. Ein Lösen und Befestigen des Karabinerhakens ist unter arktischen Bedingungen mit Handschuhen schwierig oder gar unmöglich. Erschwerend kommt Eisansatz hinzu, welcher den Karabinerhaken umgibt und blockiert. Unter maritimen Einfluss stehende arktische Gebiete bedeuten massive Vereisungsneigung für die Ausrüstung. Ohnehin ist eine Betätigung ohne Blickkontakt oder im Dunkeln ohne Übung kaum möglich.

Es ist daher Aufgabe der Erfindung, ein verbessertes Verbindungssystem zum Verbinden von Lasten, insbesondere Schlitten, an einem Gurtgeschirr zu schaffen, welches insbesondere unter Vereisungsbedingungen, Sichtbehinderung und/oder mit Handschuhen, eine vereinfachte, schnelle und sichere Handhabung erlaubt.

Diese Aufgabe wird gelöst durch ein Verbindungssystem zum Verbinden von Lasten mit den Merkmalen des Hauptanspruchs. Vorteilhafte Ausgestaltungen sind Gegenstand der Unteransprüche. Ausschließlich zum besseren Verständnis der Erfindung werden durchgängig Bezugszeichen verwendet ohne die Erfindung auf den Inhalt der Figuren zu beschränken.

Das erfindungsgemäße Verbindungssystem zum Verbinden von Lasten an einem Gurtgeschirr, umfasst ein Basiselement 20 mit Befestigungsmitteln 21 zum Befestigen an einem Gurtgeschirr 50. Letzteres kann beispielsweise ein Gürtel oder Koppel mit einem diesen in der Höhe haltenden Koppeltragegestell sein. Der Gürtel kann auch weitere Funktionsträger, beispielsweise ein Molle-System, Taschen, Laschen, etc. umfassen, welche in Zusammenhang mit Expeditionen oder militärischer Ausrüstung stehen. In jedem Fall ist aber ein Basiselement 20 mit Befestigungsmitteln 21 nötig, welches über diese mit dem Gürtel fest verbunden werden kann, beispielsweise über Bänder 51 oder Schlaufen. Das Basiselement 20 soll fest und stationär am Gurtgeschirr befestigt sein. Zum An- und Abkoppeln einer Last ist vielmehr ein separates Lastelement 10 vorgesehen.

Dieses Lastelement 10 verfügt zu diesem Zweck zunächst über Anschlussmittel 12 zum Anschließen einer Last, beispielsweise mittels einer Zugstange oder eines Zugseils. Auch hier ist vorgesehen, dass das Lastelement an der Last verbleibt und zum An- und Abkoppeln des Gurtgeschirrs von der Last daher eher regelmäßig das Lastelement mit dem Basiselement verbunden bzw. von diesem gelöst wird.

Erfindungsgemäß ist nun zunächst vorgesehen, dass das Basiselement 20 und das Lastelement 30 derart ausgelegt sind, dass diese in eine Kontaktstellung gegeneinander bringbar sind. Dabei ist zunächst das Lastelement am Basiselement zumindest teilweise fixiert. Im Gegensatz zur oben beschriebenen Karabinerverbindung wird also zuerst das Basiselement 20 mit dem Lastelement 10 nur teilweise formschlüssig verbunden. Es kann also zumindest in einer Richtung gelöst werden.

Erfindungsgemäß erleichtert diese Teilfixierung die Betätigung eines beweglichen Verriegelungselements 30, welches vorgesehen ist zum vollständigen Fixieren des bereits in Kontaktstellung befindlichen Lastelements 10 am Basiselement 20. In dieser Kontaktstellung ist das Verriegelungselement 30 relativ zum Basiselement und Lastelement in eine Verschlussstellung bringbar. In der Verschlussstellung ist das Lastelement vollständig formschlüssig mit dem Basiselement verriegelt und kann nicht mehr abfallen.

Als weitere erfindungsgemäße Besonderheit ist das Verbindungssystem nach Art eines Schnellabwurfsystems ausgebildet, zum Trennen des Lastelements 10 von dem Basiselement 20 unmittelbar aus der Verschlussstellung heraus. Es wurde erkannt, dass zur Lösung des Problems der schweren Bedienbarkeit unter arktischen Bedingungen die Verwendung eines Schnellabwurfsystems zu einer Erleichterung der Handhabung führt, obwohl es hier nicht primär auf die Geschwindigkeit des Abwurfs, wie z.B. bei einem Notfall, ankommt. Ein Schnellabwurfsystem bedeutet, dass mittels eine einzigen Handbewegung ein Trennen des Lastelements bewirkt werden kann.

Darüber hinaus sind die aus dem Stand der Technik bekannten Notabwurfsysteme nicht für das Trennen und ggf. folgendem Verbinden von Lastschlitten unter arktischen Bedingungen geeignet:
- Es sind Notabwurfsysteme bekannt, bei welchen durch eine kontrollierte Bewegung des Anwenders die Last vom Gurtgeschirr getrennt werden kann. Beispielsweise lässt sich das Gurtgeschirr für Fallschirmspringer dadurch öffnen, dass ein Schloss gedreht wird und mittels Federn die Gurtlaschen aus dem Schlossgehäuse herausgedrückt werden.
- Ebenfalls sind bei Fallschirmen Kappentrennsschlösser bekannt, mittels welchen in Notlagen die Seile des Fallschirms vom Gurtzeug getrennt werden können. Ein schnelles und einfaches Wiederherstellen der Verbindung ist dabei nicht möglich und für den Einsatzzweck "Notfall" auch nicht notwendig.
- In Zusammenhang mit Gürteln und Bändern sind auch Befestigungsvorrichtungen bekannt mit einem Clip und zumindest einem Federelement, welches zum verrastenden Eingreifen in einer Aufnahme ausgebildet ist. Durch Zusammendrücken einer bestimmten Stelle des Clips, werden diese Federelemente zusammengedrückt und lösen die Verrastung. Die beiden Bauteile springen dabei von alleine nicht auseinander, sondern es ist ein Zug in die entsprechende Richtung nötig. Abwandlungen weisen eine zusätzliche Auswerffeder auf zum Trennen der beiden Bauteile auf.
- Darüber hinaus sind Karabinerhaken in bekannt, die einen aufklappbaren Schenkel umfassen. Dieser ist in einer Rastposition durch einen Federstift gehalten. Durch Zug an dem Federstift, meist über eine daran befestigte kurze Leine, wird die Rastposition aufgehoben und der Schenkel springt auf, sofern eine Last daran zieht. Auch hier gibt es Ausführungen, bei denen der Schenkel federgestützt aufspringt.

Den oben genannten Nottrennsystemen ist gemein, dass sie für Notfälle konzipiert sind und in der Regel von einem bestimmten Lastfall ausgehen, wobei in der Regel das zu lösende System unter Zug steht oder zumindest nicht unter Druck. Es weisen die aus dem Stand der Technik bekannten trennbaren Verriegelungselemente alle einen oder mehrere der nachfolgend genannten Nachteile auf:
- Es sind Hohlräume vorhanden, wo dort eingedrungene und danach vereiste Feuchtigkeit eine Betätigung des Trennmechanismus verhindert. Es werden also Bewegungsräume von Eis zugesetzt. Ferne kann es sein, dass das Eis ein Auseinanderziehen des Schlosses behindert, da es blockierend im Weg ist.
- Sofern Federn als Bestandteil des Verriegelungsmechanismus oder zum aktiven Trennen der Elemente vorgesehen sind, kann deren Federweg ebenfalls durch eingedrungene und dort verreiste Feuchtigkeit behindert werden.
- Federstahl neigt zu Frostbruch.
- Wenn die zu trennende Last, zum Beispiel im Fall einer Zugstange, auf das Schloss drückt, erfolgt keine Trennung.
- Insbesondere im Fall des Karabinerhakens, ist dessen Lage im Raum häufig nicht definiert, so dass im Notfall erst die Leine für den Auslösemechanismus gefunden werden muss, sowie die Richtung, in welcher der Trennmechanismus zu ziehen ist.
- Schnellauslösende Karabinerhaken lösen ohne Last häufig nicht aus.

Vorzugsweise ist daher das Verbindungssystem derart ausgelegt, dass das Trennen des Lastelements 10 von dem Basiselement 20 erfolgen kann bereits durch Betätigung des Verriegelungselements 30 mittels einer einzigen Bewegung in einer Richtung. Wenn der Bediener zum Trennen nicht mehrere Schritte durchführen muss, ist ein Trennen unter Sichtbehinderung und/oder mit Handschuhen erleichtert.

Insbesondere unter Vereisungsbedingungen ist dabei vorzugsweise das Basiselement 20 und das Lastelement 10 derart ausgelegt, dass zum Trennen des Lastelements 10 von dem Basiselement 20, zuerst das Verriegelungselement 30 aus der Verschlussstellung bringbar ist. Das Lastelement wäre danach nicht mehr vollständig fixiert, sondern nur noch in der Kontaktstellung. Aus dieser könnte das Lastelement bei günstigen Bedingungen bereits von alleine herausfallen und somit eine Trennung vollenden. Diese erfolgt aber nicht, wenn das Lastelement durch schiebende Last in der Kontaktstellung verkantet, durch ungünstige Lage auf dem Basiselement in der Kontaktstellung liegen bleibt oder durch Vereisung blockiert ist.

Daher ist eine erfindungsgemäße Besonderheit, dass mittels des Verriegelungselements 30 das Lastelement 10 relativ zum Basiselement 20 aus der Kontaktstellung herausdrückbar ist. Der Bediener löst also mit einer Bewegung des Verriegelungselements zuerst die Verschlussstellung auf und das Verriegelungselements drückt auf dem weiteren Weg das Lastelement vom Basiselement weg. Der Bediener trennt also aktiv mittels seiner Kraft die Elemente auch gegen Widerstände auseinander. Dies Funktion übernehmen bei Notabwurfsystemen aus dem Stand der Technik üblicherweise Federn, die unter den genannten arktischen Bedingungen unzuverlässig sind.

Im Folgenden werden mögliche Ausgestaltungen dieses erfindungsgemäßen Konzeptes beschrieben, ohne auf den Inhalt der Figuren beschränkt zu sein:
Insbesondere für das Anhängen von Lastschlitten hat sich bewährt, dass das Basiselement 20 und das Lastelement 10 derart ausgelegt sind, dass dieses in der Kontaktstellung in einer X-Y-Ebene X-Y gegen Verschiebung in dieser X-Y-Ebene formschlüssig gesichert sind. Daher kann der Bediener das Lastelement von Hand in eine vorläufige Stellung bringen, in welcher ein Herausfallen zumindest für eine kurze Zeit bis zum vollständigen Fixieren verhindert wird. Die Hand kann sogar frei bleiben, beispielsweise um das Verriegelungselement zu betätigen. Zweckmäßigerweise ist das Lastelement in einer Richtung der Z-Achse bewegbar und in deren Gegenrichtung nicht beweglich. Das Basiselement 20 und das Lastelement 10 können durch Bewegung des Lastelements entlang der Z-Achse in Richtung auf das Basiselement 20 in Kontaktstellung gebracht werden. Dies entspricht beispielsweise einer Öse, die auf einen Dorn aufgesetzt wird.

Vorzugsweise ist dabei bereits in der Kontaktstellung das Lastelement um eine senkrecht zur X-Y-Ebene erstreckende Z-Achse Z formschlüssig gegen Drehung relativ zum Basiselement gesichert. Dies entspricht z.B. einer Platte mit rechteckiger Ausnehmung, die auf ein entsprechend großes Rechteckprofil aufgeschoben ist. Eine Verdrehsicherung hat den Vorteil, dass das Lastelement immer eine definierte Lage einnimmt, auch unter drückender Last. Dies stellt sicher, dass das Trennen immer unter denelben geometrischen Anfangsbedingungen erfolgt und verhindert im Fall von Zugstangen eine körperliche belastende oszillierende Relativbewegung zwischen Last und Gürtel beim Wandern. Erfindungsgemäß wird zur Trennung des Lastelements vom Basiselement in einer Bewegung hintereinander die Verschlussstellung aufgehoben und dann die beiden Elemente zwangsgetrennt, also auseinander gedrückt. Dazu ist vorzugsweise das Verriegelungselement 30 so ausgelegt, dass zur Trennung das Verriegelungselement 30 um einen Gesamtweg W in eine definierte Richtung im der X-Y-Ebene bewegt werden kann. Bei dessen Bewegung entlang diese Weges W wird in einem ersten Wegabschnitt W1 das Verriegelungselement 30 aus der Verschlussstellung gebracht. Man könnte nun die Elemente auseinander bewegen. Zur erfindungsgemäßen Zwangstrennung wird aber in einem zweiten Wegabschnitt W2 durch die Geometrie 39 des Verriegelungselements 30 mechanisch das Lastelement 10 relativ zum Basiselement 20 aus der Kontaktstellung herausgeschoben / herausgedrückt und somit zwangsgetrennt.

Das Verriegelungselement umfasst daher ein Verriegelungsmittel 31 zum vollständigen Verriegeln und ein Trennmittel 39 zum Auseinanderdrücken des entriegelten Lastelements vom Basiselement. Wesentlich ist hier, dass das Trennmittel nicht mittels Federkraft wirkt, mittels Kraft des Bedieners.

In einer vorteilhaften Ausgestaltung, die insbesondere unter Vereisungsbedingungen beweglich bleibt, umfasst das Verriegelungselement 30 ein Verriegelungsmittel, insbesondere einen Riegel 31, der in der Kontaktstellung in das Basiselement 20 entlang des Lastelements 10 ein- und ausschiebbar geführt ist. Dabei erfolgt das Herstellen bzw. Aufheben der formschlüssigen Verriegelung des Lastelements mit dem Basiselement. Auf Seiten des Lastelements 10 und des Basiselement 20 bilden diese in der Kontaktstellung eine Öffnung 23, in welcher und entlang welcher das Verriegelungsmittel, insbesondere der Riegel 31 herein- bzw. herausbeweglich geführt ist.

Die rein mechanische zuverlässig wirkende und ohne jede Feder nur durch Kraft des Bedieners erfolgende Zwangstrennung kann vorzugsweise durch den als Trennmittel ausgebildeten Abschnitt des Verriegelungselements erfolgen, welcher insbesondere als Keil 39 ausgebildet ist. Wenn der Bediener das Verriegelungselement mit Kraft zieht, wird beim Durchlaufen des zweiten Wegabschnitts W2 mechanisch das Lastelement relativ zum Basiselement vom Keil aus der Kontaktstellung gedrückt.

Ein vorteilhafte Ausführung des Verriegelungselements 30 weist zwei Steifen 31,32 auf, die sich in Richtung der Z-Achse Z übereinander und parallel zur X-Y-Ebene X,Y erstrecken, wobei der eine Streifen den Riegel 31 bildet und der zweite Streifen 32 den Keil 39 aufweist, welcher in Richtung der Z-Achse ansteigt. Diese Auslegung ist auch in festgefrorenem Zustand beweglich, spätestens nach einigen ruckartigen Versuchen.

Aus diesem Grund besteht vorzugsweise das Verriegelungselement 30 aus einem Eisansatz verhinderndem Material oder weist zumindest eine derartige Oberfläche auf, vorzugsweise, HDPE, Kunststoffe mit Graphitanteil und/oder Materialien mit Eisansatz verhindernden Additiven.

Wenn das Lastelement 10, das Basiselement 20 und das Verriegelungselement 30 derart ausgelegt sind, dass zur vollständigen Auslösung des Schnellabwurfsystems ein ruckartiges Ziehen über mindestens den Weg W mit dem ersten und zweiten Wegabschnitt W1,W2 ausreicht, wird eine Möglichkeit zum Notabwurf einer Last, insbesondere eines Transportschlittens geschaffen, das auch unter widrigsten operationellen und arktischen Vereisungsbedingungen sofort und bedienungsfehlerfrei auslösbar ist. Der Schlitten kann im Bruchteil einer Sekunde vollkommen getrennt werden. Bei vielen Missionen, kann es darauf ankommen, den Schlitten sofort und vollkommen intuitiv und sicher zu entfernen, beispielsweise bei Lawinen oder bei militärischen Operationen unter Beschuss.

Eine noch einfachere Bedienbarkeit ist erreichbar durch ein verlängertes Zugmittel 41 am Verriegelungselement 30, das einfach gegriffen werden kann, insbesondere mit Handschuhen. Man muss nur z.B. das Band 41 oder die Schnur greifen, was leichter als das Verriegelungselement erreichbar ist.

Wenn das verlängerte Zugmittel 41 an seinem freien Ende einen Durchrutschstop 42 für Hände, beispielsweise einen Knoten, eine Verdickung, eine Kugel, etc aufweist, ist auch ohne jedes taktile Gefühl mit vereisten Handschuhen ein Greifen, Ziehen und damit Trennen von der Last sichergestellt.

Um ein versehentliches Ziehen des verlängerten Zugmittels zu verhindern, ebenso wie ein ungewolltes Rausrutschen des Verriegelungselements 30 aus der Verschlussstellung ist vorzugsweise eine Sicherung zur Vermeidung eines versehentlichen Verrutschens des Verriegelungselements 30 vorgesehen ist. Diese hält das Verriegelungselement in der Verschlussstellung am Basiselement fest.

Dazu ist erstreckt sich das verlängerte Zugmittel bzw. Band 41 vorzugsweise vom Verriegelungselement 30 zum Basiselement, Lastelement oder Gurtgeschirr und ist dort an einem Befestigungspunkt 44 lösbar mit diesem verbunden. Dabei verläuft das verlängerte Zugmittel 41 fast straff zwischen Verriegelungselement 30 und dem Befestigungspunkt 44, damit bei anfänglichem Verrutschen des Verriegelungselements das gespannte Zugmittel 41 ein weiteres Verrutschen verhindert.

Vorzugsweise ist als Sicherung das verlängerte Zugmittel, insbesondere das Band 41, sowie das Basiselement, Lastelement oder Gurtgeschirr am Befestigungspunkt jeweils mit lösbaren Verbindungsmitteln, insbesondere einklickbaren Druckknöpfen 44, einer Magnetverbindung oder einer Klettverbindung versehen. Jenseits des Befestigungspunktes hängt das freie Ende 42 des am Befestigungspunkt befestigten verlängerten Zugmittels, z.B. des Bandes 41 schlaff herunter und kann gegriffen werden. Diese Ausführung hat auch den Vorteil, dass das Zugmittel an einer definierten Stelle am Körper gehalten wird und greifbar ist. Ferner wird die Notauslösung von einer schwungvollen ruckartigen Handbewegung unterstützt, welche ggf. das Lösen von Vereisungen erleichtert: Das frei hängende Ende wird gegriffen und nach unten gezogen. Unter leichtem Widerstand wird zuerst die Sicherung überwunden. Auf dem weiteren Weg der Hand wird lediglich kraftfrei das Band straff gezogen und daher nimmt die Hand Geschwindigkeit auf, um dann ruckartig mittels des Bandes 41 am Verriegelungselement 30 zu reißen. Eis platzt ggf. ab und der Schwung sorgt auch für kraftvolle Bewegung des Trennmittels bzw. des Keils zum finalen Abstoßen des Lastelements.

Die nachfolgend beschriebene Gestaltung ist leicht herstellbar: Vorzugsweise ist das Lastelement 10 ein flächiges Bauteil mit einer inneren flächigen Ausnehmung 11 mit einer definierten Grundfläche. Dazu passt das Basiselement 20, welches ein Bauteil mit einer von einer tunnelartigen Erhebung 22 gebildeten Durchgangsöffnung 23 ist, wobei die Grundfläche der Erhebung 22 mit der Grundfläche der flächigen Ausnehmung 11 des Lastelements übereinstimmt und die Erhebung in die flächige Ausnehmung passt. Durch Einsetzen der Erhebung 22 in die flächige Ausnehmung 11 ist die Kontaktstellung gegeben. In dieser überragt die tunnelartige Erhebung 22 des Basiselements das Lastelement 10. Dann liegt der obere Teil der Durchgangsöffnung 23 oberhalb des Lastelements 10 und man kann in diese den oberhalb des Lastelements aufliegenden verschiebbaren Riegel 31 einschieben zur Einnahme der Verschlussstellung.

Ferner wird beansprucht ein Gurtgeschirr insbesondere mit dem beschriebenen Verbindungssystem, wobei das Basiselement 20 mit den Befestigungsmitteln 21 am Gurtgeschirr befestigt ist und am Lastelement 10 an den Anschlussmitteln 12 über eine Zugstange oder ein Zugseil eine Last, insbesondere ein Schlitten, angeschlossen ist, wobei eine Schnellabwurfsystems vorgesehen ist.

Schließlich wird beansprucht die Verwendung des beschriebenen Verbindungssystems zum Befestigen und Trennen eines Lastenschlittens von einem an einem Menschen angelegten Gurtgeschirr mittels eines Schnellabwurfsystems.

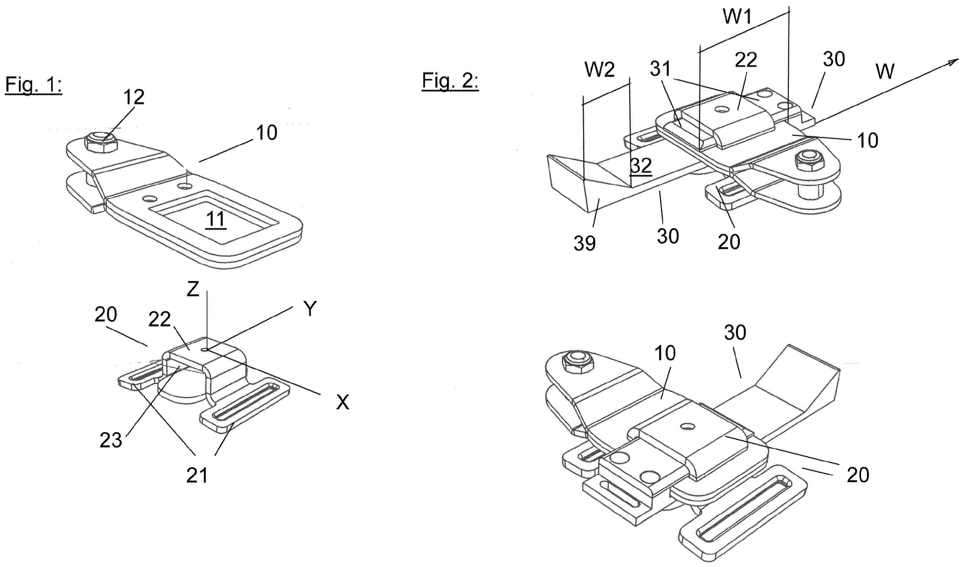

Fig. 1 zeigt ein Basiselement 20 mit Befestigungsmitteln 21 in Form von Laschen zum Befestigen an einem Gurtgeschirr. Das Basiselement 20 hat eine von einer tunnelartigen Erhebung 22 gebildeten Durchgangsöffnung 23.

Darüber schwebt ein Lastelement 10 mit Anschlussmitteln 12 in Form einer Verschraubung zum Anschließen eines Lastschlittens über eine Zugstange. Das Lastelement 10 ist ein flächiges Bauteil mit einer inneren flächigen Ausnehmung 11 von einer definierten Grundfläche. Da die Grundfläche der Erhebung 22 mit der Grundfläche der flächigen Ausnehmung 11 des Lastelements übereinstimmt und die Erhebung in die flächige Ausnehmung passt, kann durch Einsetzen der Erhebung 22 in die flächige Ausnehmung 11 die Kontaktstellung eingenommen werden. In der X-Y Ebene könnten dann die beiden Bauteile nicht gegeneinander verdreht werden und sind daher teilfixiert.

Fig. 2 zeigt das Basiselement 20 und das Lastelement 30 nicht nur in der Kontaktstellung, sondern darüber hinaus in der Verschlussstellung. Dabei ist das bewegliche Verriegelungselement 30 mit seinem Riegel 31 in den oberen Teil der Durchgangsöffnung 23 oberhalb des Lastelements 10 eingeschoben. Die Durchgangsöffnung 23 ist gebildet vom der tunnelartige Erhebung 22 des Basiselements 20, welche das aufgelegte Lastelement 10 überragt. Daher liegt in der Kontaktstellung der obere Teil der Durchgangsöffnung 23 oberhalb des Lastelements 10 und dieser Teil kann vom oberhalb des Lastelements 10 gleitend verschiebbaren Riegel 31 durchlaufen werden zur Einnahme der Verschlussstellung. In dieser kann das Lastelement 10 nicht mehr nach oben abgehoben werden.

Das gezeigte Verbindungssystem ist nach Art eines Schnellabwurfsystems ausgebildet, und daher kann ein Trennen des Lastelements 10 von dem Basiselement 20 unmittelbar aus der Verschlussstellung heraus erfolgen durch Bewegung des beweglichen Verriegelungselements 30 in Richtung des Weges W in der X-Y-Ebene. Bei der Bewegung entlang des Weges W wird zuerst in einem ersten Wegabschnitt W1 das Verriegelungselement 30 aus der Verschlussstellung gezogen. Der Riegel 31 ist dann aus der Durchgangsöffnung 23 herausgezogen und gibt vollständig die Oberfläche des Lastelements 10 frei, welches daher nach oben in Z-Richtung abgehoben werden kann.

In dem anschließenden zweiten Wegabschnitt W2 bewirkt allerdings die Geometrie 39 des unteren Streifens 32 des Verriegelungselements 30 rein mechanisch ein Herausheben und Trennen des Lastelements 10 vom Basiselement 20 aus der Kontaktstellung heraus.

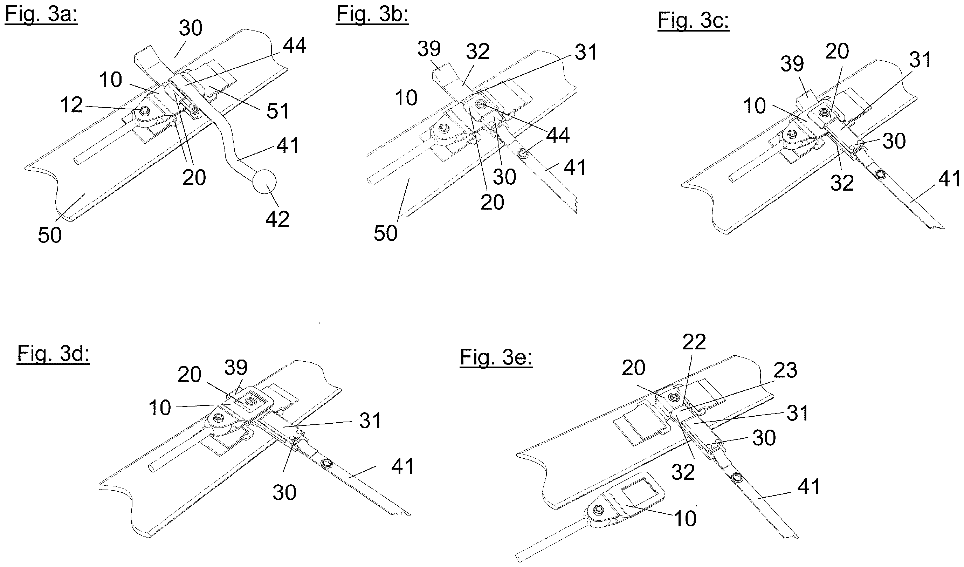

Die Fig. 3.a - 3.e erläutern schrittweise den Trennvorgang anhand eines bevorzugten Ausführungsbeispiels.

Fig. 3.a und 3b zeigen das Basiselement 20 und das Lastelement 30 vollständig fixiert in der Verschlussstellung. Dabei ist das bewegliche Verriegelungselement 30 mit seinem unteren Riegel 31 in den oberen Teil der Durchgangsöffnung 23 des Basiselements 20 oberhalb des Lastelements 10 eingeschoben. Die Durchgangsöffnung 23 ist gebildet vom der tunnelartigen Erhebung 22 des Basiselements 20, welche das aufgelegte Lastelement 10 überragt. Das Lastelement 10 kann nicht mehr nach oben abgehoben werden.

Um ein versehentliches Ziehen des verlängerten Zugmittels zu verhindern, ebenso wie ein ungewolltes Rausrutschen des Verriegelungselements 30 aus der Verschlussstellung ist vorzugsweise eine Sicherung zur Vermeidung eines versehentlichen Verrutschens des Verriegelungselements 30 vorgesehen ist. Diese hält das Verriegelungselement in der Verschlussstellung am Basiselement fest.

Dazu ist erstreckt sich das verlängerte Zugmittel bzw. Band 41 vorzugsweise vom Verriegelungselement 30 zum Basiselement, Lastelement oder Gurtgeschirr und ist dort an einem Befestigungspunkt 44 lösbar mit diesem verbunden. Dabei verläuft das verlängerte Zugmittel 41 fast straff zwischen Verriegelungselement 30 und dem Befestigungspunkt 44, damit bei anfänglichem Verrutschen des Verriegelungselements das gespannte Zugmittel 41 ein weiteres Verrutschen verhindert.

Vom unteren Ende des Verriegelungselements 30 erstreckt sich als verlängertes Zugmittel ein flexibles Band 41, welches mittels Druckknopfverbindung 44 am Befestigungspunkt des Basiselements 20 lösbar verbunden ist. In Fig. 3.a hängt das freie Ende des am Befestigungspunkt befestigten Bandes 41 jenseits des Befestigungspunktes 44 schlaff herunter und kann leicht gegriffen werden, da es an einer definierten Stelle am Körper gehalten wird. Eine Kugel 42 dient als Durchrutschstopper für Hände. Das Band 41 sichert das Verriegelungselement 30 gegen Herausrutschen.

Fig. 3.b zeigt den Beginn der Notauslösung: Das frei hängende Ende mit der Kugel 42 wurde bereits gegriffen und nach unten gezogen. Unter leichtem Widerstand wird zuerst die Durckknopfverbindung 44 gelöst. Auf dem weiteren Weg der Hand wird lediglich kraftfrei das Band 41 straff gezogen und daher nimmt die Hand Geschwindigkeit auf, um dann ruckartig mittels des Bandes am Verriegelungselement 30 zu reißen.

Fig 3.c zeigt den ersten Weg, den das Verriegelungselement 30 unter Zug vom Band 41 zurücklegt und dabei die Verschlussstellung aufhebt. Der Riegel 31 ist dann aus der Durchgangsöffnung 23 herausgezogen und gibt danach vollständig die Oberfläche des Lastelements 10 frei, welches daher nach oben in Z-Richtung abgehoben werden kann. In der Fig. 3.c liegt allerdings ein kleiner Teil des Riegels 31 noch auf einem Teil des Lastelements, das daher noch nicht völlig frei ist. Der Keil 39 am unteren Streifen 32 des Verriegelungselements 30 beginnt nun schon einen Teil des Lastelements 10 anzuheben und zu trennen, obwohl die Verschlussstellung noch nicht vollständig aufgehoben ist. Daher dürfen sich die oben genannten ersten und zweiten Teilwege W1,W2 teilweise überlappen.

In Fig. 3.d hat der obere Riegel 31 vollständig die Oberfläche des Lastelements 10 frei gegeben, welches daher nun abgebbar ist. Der Keil 39 hat auf dem weiteren Weg diese Trennung unterstützt und das Lastelement 10 vollkommen aus der Kontaktstellung herausgehoben.

Fig. 3.e zeigt schließlich die vollständige Trennung von Last- und Basiselement 10, 20. Das Verriegelungselement 30 verbleibt im Basiselement 20, und zwar in der in in der Durchgangsöffnung 23 der Erhebung 22. Der Keil 39 ist zu hoch und kann daher nicht aus der Durchgangsöffnung 23 fallen.

Das Verbinden erfolgt in umgekehrter Reihenfolge.

## Patentansprüche

1. Verbindungssystem zum Verbinden und Trennen von Lasten an einem Gurtgeschirr, mit
einem Basiselement (20) mit Befestigungsmitteln (21) zum Befestigen an einem Gurtgeschirr;
einem Lastelement (10) mit Anschlussmitteln (12) zum Anschließen einer Last, beispielsweise ein Lastschlitten, insbesondere über eine Zugstange oder ein Zugseil,
**dadurch gekennzeichnet, dass**
das Basiselement (20) und das Lastelement (30) derart ausgelegt sind, dass diese in eine Kontaktstellung gegeneinander bringbar sind, bei welcher das Lastelement am Basiselement teilweise fixiert ist;
ein bewegliches Verriegelungselement (30) vorgesehen ist zum vollständigen Fixieren des in Kontaktstellung befindlichen Lastelements (10) am Basiselement (20), wobei in der Kontaktstellung das Verriegelungselement (30) relativ zum Basiselement und Lastelement in eine Verschlussstellung bringbar ist, in welcher das Lastelement vollständig formschlüssig mit dem Basiselement verriegelt ist, und
das Verbindungssystem nach Art eines Schnellabwurfsystems ausgebildet ist, zum Trennen des Lastelements (10) von dem Basiselement (20) unmittelbar aus der Verschlussstellung heraus.

2. Verbindungssystem nach Anspruch 1, **dadurch gekennzeichnet, dass** das Verbindungssystem derart ausgelegt ist, dass das Trennen des Lastelements (10) von dem Basiselement (20) erfolgen kann bereits durch Betätigung des Verriegelungselements mittels einer einzigen Bewegung in einer Richtung.

3. Verbindungssystem nach Anspruch 1 oder 2, **dadurch gekennzeichnet, dass** das Basiselement (20) und das Lastelement (10) derart ausgelegt, sind, dass zum Trennen des Lastelements (10) von dem Basiselement (20), das Verriegelungselement (30) aus der Verschlussstellung bringbar ist und ferner mittels des Verriegelungselements (30) das Lastelement (10) relativ zum Basiselement (20) aus der Kontaktstellung herausdrückbar ist.

4. Verbindungssystem nach einem der vorherigen Ansprüche, **dadurch gekennzeichnet, dass** das Basiselement (20) und das Lastelement (10) derart ausgelegt sind, dass diese in der Kontaktstellung
in einer X-Y-Ebene (X-Y) gegen Verschiebung in dieser X-Y-Ebene formschlüssig gesichert sind, und vorzugsweise um eine senkrecht zur X-Y-Ebene erstreckende Z-Achse (Z) formschlüssig gegen Drehung gesichert sind und
in einer Richtung der Z-Achse (Z) bewegbar ist und in deren Gegenrichtung nicht bewegt werden kann.

5. Verbindungssystem nach einem der vorherigen Ansprüche, **dadurch gekennzeichnet, dass** das Basiselement (20) und das Lastelement (10) derart ausgelegt sind, dass dieses durch Bewegung des Lastelement entlang der Z-Achse in Richtung auf das Basiselement (20) in Kontaktstellung bringbar ist.

6. Verbindungssystem nach einem der vorherigen Ansprüche, **dadurch gekennzeichnet, dass** das Verriegelungselement ein Verriegelungsmittel (31) zum vollständigen Verriegeln des Lastelements mit dem Basiselement in der Verschlussstellung und ein Trennmittel (39) zum Auseinanderdrücken des entriegelten Lastelements vom Basiselement.

7. Verbindungssystem nach einem der vorherigen Ansprüche, **dadurch gekennzeichnet, dass** das Verriegelungselement (30) so ausgelegt ist, dass zur Trennung des Lastelements vom Basiselement, das Verriegelungselement (30) um einen Weg (W) in eine definierte Richtung im der X-Y-Ebene bewegt werden kann, wobei bei dessen Bewegung entlang des Weges (W) in einem ersten Wegabschnitt (W1) das Verriegelungselement (30) aus der Verschlussstellung gebracht wird und ferner in einem zweiten Wegabschnitt (W2) die Geometrie (39) des Verriegelungselements (30) mechanisch das Lastelement (10) relativ zum Basiselement (20) aus der Kontaktstellung herausschiebt und somit trennt.

8. Verbindungssystem nach einem der vorherigen Ansprüche, **dadurch gekennzeichnet, dass**
das Verriegelungselement (30) ein Verriegelungsmittel, insbesondere einen Riegel (31) umfasst, der in der Kontaktstellung in das Basiselement (20) entlang des Lastelements (10) ein- und ausschiebbar geführt ist zum Herstellen bzw. Aufheben der formschlüssigen Verriegelung des Lastelement mit dem Basiselement und/oder das Lastelement (10) und das Basiselement (20) in der Kontaktstellung eine Öffnung (23) bilden, in welcher und entlang welcher das Verriegelungsmittel, insbesondere der Riegel (31) herein- bzw. herausbeweglich geführt ist.

9. Verbindungssystem nach einem der vorherigen Ansprüche, **dadurch gekennzeichnet, dass** ein Abschnitt des Verriegelungselements als Trennmittel, insbesondere Keil (39), ausgebildet ist, welcher beim Durchlaufen des zweiten Wegabschnitts (W2) des Verriegelungselements (30) mechanisch das Lastelement relativ zum Basiselement aus der Kontaktstellung hebt.

10. Verbindungssystem nach einem der vorherigen Ansprüche, **dadurch gekennzeichnet, dass** das Verriegelungselement (30) zwei Steifen (31,32) aufweist, die sich in Richtung der Z-Achse (Z) übereinander und parallel zur X-Y-Ebene (X,Y) erstrecken, wobei der eine Streifen den Riegel (31) bildet und der zweite Streifen (32) den Keil (39) aufweist, welcher in Richtung der Z-Achse ansteigt.

11. Verbindungssystem nach einem der vorherigen Ansprüche, **dadurch gekennzeichnet, dass** das Verriegelungselement (30) aus einem Eisansatz verhinderndem Material besteht oder eine derartige Oberfläche aufweist, insbesondere HDPE, Kunststoffe mit Graphitanteil und/oder Materialien mit Eisansatz verhindernden Additiven.

12. Verbindungssystem nach einem der vorherigen Ansprüche, **dadurch gekennzeichnet, dass** das Lastelement (10), das Basiselement (20) und das Verriegelungselement (30) derart ausgelegt sind, dass zur vollständigen Auslösung des Schnellabwurfsystems ein ruckartiges Ziehen über mindestens den Weg (W) des ersten und zweiten Wegabschnittes (W1,W2) ausreicht, wobei vorzugsweise
ein verlängertes Zugmittel (41) am Verriegelungselement (30) vorgesehen ist, insbesondere eine Schnur, ein flexibles Band (41), welches insbesondere an dem freien Ende einen Durchrutschstop (42) für Hände, beispielsweise einen Knoten, eine Verdickung, eine Kugel, etc aufweist; und/oder
eine Sicherung zur Vermeidung eines versehentlichen Verrutschens des Verriegelungselements (30) vorgesehen ist, welche das Verriegelungselement in der Verschlussstellung am Basiselement hält, wobei
vorzugsweise als Sicherung das verlängerte Zugmittel (41) mit dem Basiselement, dem Lastelement oder dem Gurtgeschirr an einem Befestigungspunkt (44) lösbar verbindbar ist, damit bei anfänglichem Verrutschen des Verriegelungselements das dabei gespannte Zugmittel ein weiteres Verrutschen verhindert.

13. Verbindungssystem nach Anspruch 11, **dadurch gekennzeichnet, dass** als Sicherung das verlängerte Zugmittel (41) sowie das Basiselement, Lastelement oder Gurtgeschirr jeweils lösbare Verbindungsmittel, insbesondere einklickbare Druckknöpfe (44), eine Magnetverbindung oder eine Klettverbindung aufweisen, damit bei anfänglichem Verrutschen des Verriegelungselements das dabei gespannte Zugmittel ein weiteres Verrutschen verhindert.

14. Verbindungssystem nach einem der vorherigen Ansprüche, **dadurch gekennzeichnet, dass**
das Lastelement (10) ein flächiges Bauteil mit einer inneren flächigen Ausnehmung (11) von einer definierten Grundfläche ist;
das Basiselement (20) ein Bauteil mit einer von einer tunnelartigen Erhebung (22) gebildeten Durchgangsöffnung (23) ist, wobei die Grundfläche der Erhebung (22) mit der Grundfläche der flächigen Ausnehmung (11) des Lastelements übereinstimmt und die Erhebung in die flächige Ausnehmung passt,
wobei durch Einsetzen der Erhebung (22) in die flächige Ausnehmung (11) die Kontaktstellung gegeben ist;
wobei in der Kontaktstellung die tunnelartige Erhebung (22) des Basiselements das Lastelement (10) überragt, sodass der obere Teil der Durchgangsöffnung (23) oberhalb des Lastelements (10) liegt und diese vom oberhalb des Lastelements verschiebbaren Riegel (31) durchlaufen werden kann zur Einnahme der Verschlussstellung.

15. Gurtgeschirr (50) mit einem Verbindungssystem, insbesondere nach einem der vorherigen Ansprüche, zum Verbinden von Lasten, wobei das Basiselement (20) mit den Befestigungsmitteln (21) am Gurtgeschirr befestigt ist und
am Lastelement (10) an den Anschlussmitteln (12) insbesondere über eine Zugstange oder ein Zugseil eine Last, insbesondere ein Schlitten, angeschlossen ist,
**dadurch gekennzeichnet, dass**
das Verbindungssystem nach Art eines Schnellabwurfsystems ausgebildet ist.
